# EUROPEAN PATENT APPLICATION

(11) **EP 0 825 773 A1**
(43) Date of publication of application: **25.02.1998**
(21) Application number: 97401901.0
(22) Date of filing: 08.08.1997
(51) Int. Cl.: H04N 7/173, H04N 7/20

(54) **Interactive satellite television system**

(30) Priority: 12.08.1996 FR 9610130
(71) Applicant: THOMSON Multimedia, 92648 Boulogne Cédex (FR)
(72) Inventor: Harrison, David, 92648 Boulogne Cedex (FR)
(74) Representative: Ruellan-Lemonnier, Brigitte

(57) **Abstract**

The invention relates to a system for transmitting data between a distribution centre and a subscriber, this system transporting a useful signal to the subscriber and possessing a return path, characterized in that a carrier signal is transmitted in addition to the useful signal and in that the frequency of the signal transmitted over the return path is synchronized with the frequency of the carrier signal.

Application to satellite television.

## Description

The invention relates to a system for transmitting satellite television pictures. It concerns more particularly the construction of a return link at subscriber level.

Systems for receiving satellite television programmes are known, for example the DSS digital system, the initials of the registered trademark Digital Satellite System.

One of the existing solutions for constructing the return link from the subscriber to the monitoring centre, is the use of the telephone link. The customer's standard television hardware consists of an outdoor unit comprising the satellite antenna and the low-noise receiving block or LNB standing for Low Noise Blockdown Converter and the indoor unit comprising the demodulators and other decoders. This indoor unit therefore needs to be connected to a telephone link via a modem so as to provide the return channel specific to each customer.

This solution is not optimal for the following reasons:
- The customer must pay for the use of the line on the basis of the duration of the calls and the distance, and this may give rise to high costs, in particular if long-distance or international links are necessary.
- A telephone line must be connected to each customer's premises, this not always being possible in isolated areas or developing countries.
- The link to the internal unit requires that the telephone socket be available in the vicinity of the decoder.
- It is not suitable for mobile applications.

Another solution consists in using the satellite link as return path, via the subscriber's parabolic antenna used for reception. This solution is utilized in the point-multipoint bi-directional satellite communication networks, for example the terminals of the Gilat Satellite Network Limited company, known under the registered trademark as Two-way VSAT (standing for Very Small Aperture Terminal).

The applications of such networks are of a semi-professional type, such as debit authorizations for bank cards, the registering of lottery numbers at points of sale, electronic funds transfers, etc. The cost of these systems is high. The exchange protocols, in particular satellite access authorizations, are complex to implement. These systems are generally illsuited to a large number of uplinks, that is to say several million subscribers, the frequency of transmission conflicts being tied to the number of subscribers.

The return signals must be very frequency-stable, demanding high construction costs owing to the use of high-frequency synthesizers, these costs being incompatible with mass-market hardware.

The purpose of the present invention is to solve the aforesaid drawbacks.

For this purpose, the subject of the invention is a system for transmitting data between a distribution centre and a subscriber, this system possessing a return path, characterized in that a carrier signal is transmitted at a frequency determined by the distribution centre and in that the frequency of the signal transmitted over the return path is synchronized with the frequency of the carrier signal.

Its subject is also a receiver of a data transmission system, characterized in that it includes at least one mixer receiving the carrier signal and delivering a signal whose frequency is tied to that of the return signal.

By virtue of the invention, the provision of a satellite return path is easily achieved, is of a non-prohibitive cost both to the subscriber and to the provider and is compatible with the characteristics of satellite transponders.

Because all the receivers are synchronized on a single frequency, controlled by the monitoring centre, it is possible to regulate this return frequency and allow the utilization of narrow passband transponders. The frequency drift of the return signal is regulated by the operator and the phase noise of the return signal is greatly reduced, allowing better utilization of the frequency band of the satellite and higher modulation rates.

The cost of construction is reduced since it is no longer necessary to use, in the subscribers' "receiving" systems, highly frequency-stable high-frequency oscillators or synthesizers. Mass-market circuits can be used to implement the invention.

The exchange protocols are simplified and transmission conflicts are suppressed owing to the polling-type ''interrogation'' of the subscriber receivers on the basis of their subscriber codes. These codes may even be installed or modified remotely.

Also, by virtue of this transmission system, the televiewer is no longer obliged to subscribe to the telephone network. It is no longer necessary to construct a connection from the indoor unit of the television system to the telephone network. The cost of utilization is regulated solely by the programme supplier, the Telecom operator no longer being relevant.

Other features and advantages of the invention will emerge clearly in the following description given by way of non-limiting example and with regard to the appended figures which represent:
- figure 1, a simplified diagram of a satellite transmission system with return path;
- figure 2, a schematic of the outdoor unit of the subscriber's receiving system;
- figure 3, a schematic of the indoor unit of the subscriber's receiving system.

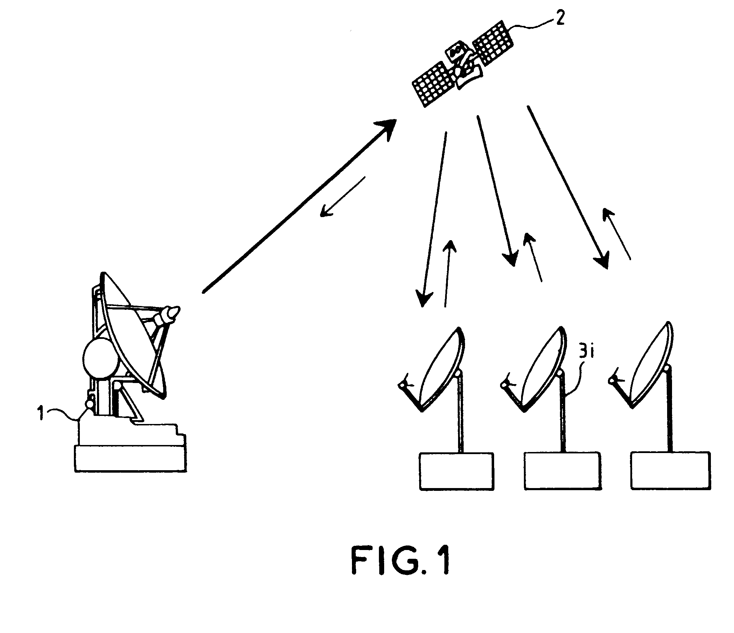

Figure 1 represents the basic concept of the return path of a satellite transmission system implemented by the invention.

An earth station 1 equipped with an antenna of large diameter, for example 4 to 6 meters, transmits, via a satellite 2, the information and programmes made available to the subscribers. This information and these programmes are picked up at each subscriber's level by way of a parabolic antenna linked to reception and processing circuits, the whole forming part of the overall receiving system 3i installed at the premises of subscriber i.

These small-diameter antennas, of the order of 45 to 90 cm across, are, in the invention, used also for the return path. Thus, a "customer" up-path transmits return data via the satellite 2 to the base station 1 which therefore also has the role of collecting and centralizing the data transmitted by the subscribers and received on its large-diameter antenna.

This up-path operates, for example, in the 14 - 14.5 GHz, 14.5 - 14.8 GHz or 17.3 - 18.1 GHz frequency bands.

The data transmitted over this path are the data relating to pay television, or Pay Per View, or more generally interactive television which allows the subscriber immediate access to films, interactive games, telepurchasing, downloading of software and also services such as database enquiries, bookings, etc.

Owing to the very large number of subscribers, customer access to the return path must be monitored. For this purpose, an identification code is allocated to each subscriber unit and the latter is authorised to send only upon receiving this code transmitted by the monitoring centre, via the satellite.

This identification code can be installed permanently during manufacture of the hardware or else be loaded from the monitoring centre via a procedure run when installing and initializing the system at the customer's premises.

Thus, to avoid the risks of interference or saturation of the satellite which could occur in the case of simultaneous transmissions from subscribers, these transmissions are triggered in accordance with a procedure of interrogations of the polling type on the part of the monitoring centre.

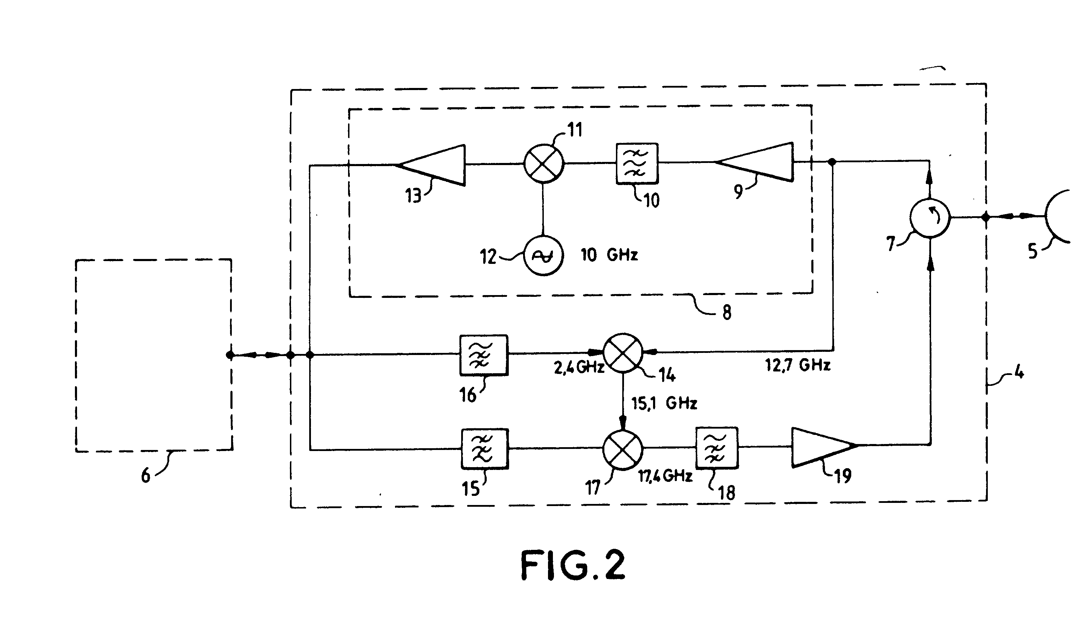

Figure 2 represents an embodiment of the subscriber's satellite receiving system or "receiver".

This system is composed of a satellite antenna 5, an outdoor unit 4 and an indoor unit 6.

Hence, here the terms "subscriber's receiving system" or "receiver" also encompass the sending part of the indoor and outdoor units.

The outdoor unit 4 is linked to a parabolic antenna 5 through a first link over which microwave signals are exchanged; it is also linked to the indoor unit 6, which will be described later, through a second link, for example of coaxial type.

The outdoor unit consists of a receive path which receives the satellite signals originating from the antenna and transmits them to the indoor unit, and a send path for transmitting the signals from the indoor unit to the antenna.

A microwave link connects the antenna to the input/output of the outdoor unit, itself linked to the input/output of a diplexer 7. The signals received by the antenna 5 are thus transmitted to the diplexer 7 whose role is to route them, via its receiver-side output (receive output), to a low-noise block LNB standing for Low Noise Blockdown converter. This block consists, in a known manner, of a low-noise amplifier LNA 9, followed by a band-pass filter for rejecting the image frequency 10. This filter is linked to a first input of a mixer 11 whose output drives the input of an intermediate-frequency amplifier 13. A local oscillator 12 is linked to the second input of the mixer 11. The output of the amplifier 13 which is the output of the LNB block is linked to a second input/output of the outdoor unit 4.

By way of example, the signals received by the antenna 5 are in the 10.95 - 11.7 GHz frequency band. These signals transmitted as input to the low-noise amplifier travel through the band-pass filter 10 whose pass band corresponds to this frequency band. They are then transposed to the intermediate frequency in the 950 - 1700 MHz band, the pass band of the amplifier 13, with the aid of the mixer 11 and of the local oscillator 12 set to a frequency of 10 GHz.

The receive output of the diplexer is also linked to a first input of a mixer circuit 14 whose role is explained later.

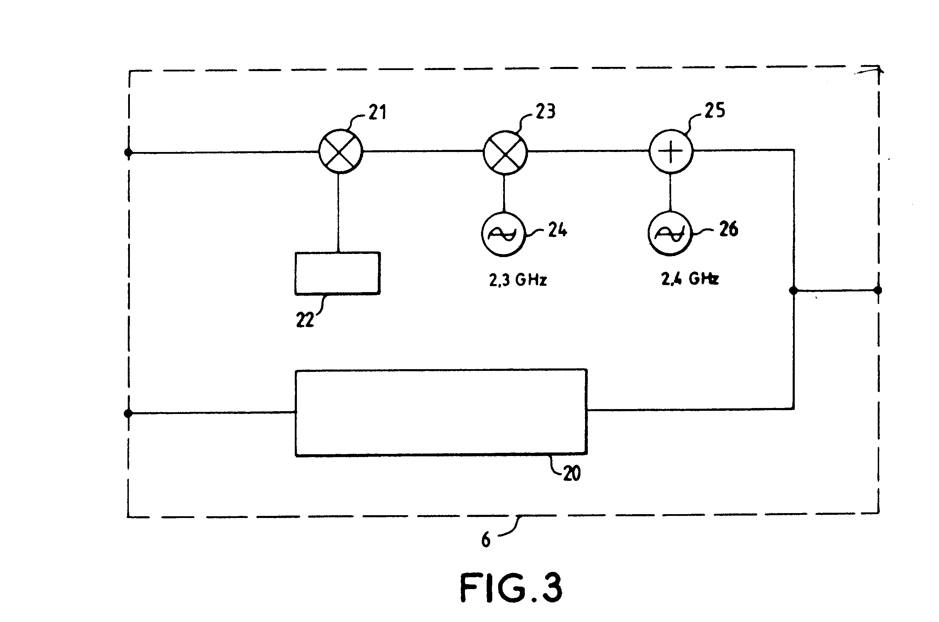

The signals output by the outdoor unit 4 are transmitted to the input/output of the indoor unit 6 via a coaxial cable. This indoor unit is described in Figure 3. The input/output of this unit is linked to a receive circuit 20 whose role, among others, is to decode the encrypted video signals from the outdoor unit and transmitted over the coaxial cable, in the same way as a conventional indoor unit. This receive circuit also filters the signals exchanged over the coaxial cable. The decoded signals available at the output of this circuit 20 are then transmitted on an output of the indoor unit to which a terminal will be connected, for example a television set.

A modulator of the CDMA type 21, standing for Code Division Multiple Access, and carrying out modulation of a base signal by a binary train receives on a first input the baseband useful signal which is the digital signal to be transmitted. This first input is linked to an input of the indoor unit, to which input is connected, for example, a smart card, and/or to an output of a memory of the indoor unit not represented in the figure. Connected to the second input of the modulator is a binary coding circuit 22 delivering a stream of binary words coded by a pseudorandom code, namely the spread spectrum code according to the conventional CDMA modulation process. The modulator 21 is, for example, an exclusive OR gate. The output of the modulator 21 is linked to a first input of a converter 23 and of its filtering circuits. An oscillator 24 transmits a sinusoidal signal, for example at a frequency of 2.3 GHz, to the second input of this converter so as to transpose the signal received on the first input. The transposed and filtered signal output by this converter feeds a first input of an adder 15. The second input receives the signal from an oscillator 26 delivering a sinusoidal signal at a frequency of 2.4 GHz. The output of this adder is linked to the input/output of the indoor unit and then to that of the outdoor unit by way of the coaxial cable.

Thus the signals to be transmitted, among other things the information in the smart card, are modulated by CDMA-type modulation. Of course, it is just as conceivable to connect, to the input receiving these baseband signals, a memory internal to the indoor unit 6, the various information to be transmitted, such as screened films, etc., then being stored in the latter. The modulated signal is then transposed to a frequency of 2.3 GHz. A reference signal, at the frequency 2.4 GHz, is appended to this useful signal and the whole is transmitted to the input/output of the outdoor unit 4 represented in figure 2, via the coaxial cable.

This input/output is linked to the input of a low-pass filter 15. The output of this first filter is linked to a first input of a mixer plus filter 17. The input/output of the outdoor unit is also linked to the input of a high-pass filter 16. The output of this filter is linked to a first input of a mixer 14. The second input of this mixer receives the signal at the frequency 12.7 GHz originating from the receive output of the diplexer 7. The output of the mixer 14 is linked to the second input of the mixer 17. The output of this mixer is linked to the input of a high-pass filter 18. The output of the filter is linked to a power amplifier 19, the output of the power amplifier being for its part linked to the send input of the diplexer 7. The input/output of the antenna-side diplexer is, as indicated above, linked to the input/output of the outdoor unit linked to the antenna.

The reference signal at the frequency 2.4 GHz is filtered by the high-pass filter 16 which eliminates the useful signal which is at a lower frequency and feeds the first input of the mixer 14. The second input receiving the signal at the frequency 12.7 GHz, the mixer output delivers a reference signal at a frequency of 15.1 GHz. This signal is utilized to transpose the CDMA useful signal recovered on the first input of the transposer 17, after having been filtered by the low-pass filter 15, the latter eliminating the reference signal at the frequency 2.4 GHz. This circuit 17 also has the role of filtering the IF band signals coming from the receive path so as to eliminate them. The signal modulated at the frequency 17.4 GHz is filtered at the output of mixer, then amplified and then transmitted as output from the outdoor unit by way of the diplexer so as to feed the antenna 5.

The signals from the indoor unit consist of the useful signal frequency-transposed by a reference signal whose frequency is outside the intermediate-frequency band at reception so as to be able to filter it and extract it from the IF signals transmitted by the low-noise block 8, the signals exchanged between the indoor unit and the outdoor unit travelling over the same coaxial cable.

The oscillators 24 and 26 which deliver the frequencies of 2.3 GHz and 2.4 GHz are generally synthesizers which generally, owing to the low band of the signal generated, deliver a very stable signal for a low cost of construction. Consequently, the frequency and hence the stability of the signal transmitted at the frequency 17.4 GHz is tied directly to the 12.7 GHz reference signal transmitted by the satellite.

It is therefore possible to do away with the use of a synthesizer at the frequency of the return signal in order to retransmit a very frequency-stable signal, which synthesizer would be very costly, given the frequency of the order of some ten gigaherz to be generated.

The frequencies of 2.3 GHz and 2.4 GHz are given by way of indication and for the sake of the description. In fact, it is sufficient for the sum of these two frequencies to correspond to the difference between the frequency of the received frequency synchronization signal and the frequency of the returned signal. These frequencies may originate from the same synthesizer.

The information transmitted over the return channel, as indicated earlier, is for example the data relating to video on demand or PPV (Pay Per View), data relating to the subscribers's consumption, films and programmes screened, the data relating to the televiewer' s choices in the case of interactive television, etc., data stored on the smart card and/or in the memory of the indoor unit.

A variant of the invention consists in utilizing the reference signal by the receiver to synchronize, in addition to the frequency of the return signal, the oscillators of the indoor unit. In this case, the LNB block has a wider passband, the mixer 11 also receiving the signal of frequency 12.7 GHz which is therefore transmitted to the indoor unit at a frequency of 2.7 GHz after transposition. This signal is then recovered on a further input for frequency synchronization of each of the oscillators 24 and 26. Thus, the device is fully frequency-monitored by just the 12.7 GHz signal received by the antenna.

Another variant of the invention consists in utilizing the reference signal received by the receiver to transport a subscriber code, thus making it possible to interrogate each subscriber receiver in succession. In this case, the LNB block has a wider passband, the mixer 11 receiving the signal of 12.7 GHz frequency which is transmitted to the indoor unit at a frequency of 2.7 GHz after transposition. This signal is filtered, in the send path, for example with the aid of a band-pass filter 16 instead of the low-pass filter. The signal is demodulated by the receive circuit 20 which then includes a demodulator so as to extract the code therefrom. This circuit transmits a send command to the send circuits or oscillators of the "receiver", these circuits being activated when the code corresponds to that of the subscriber. As indicated earlier, the reference signal received can also be used for programming this code when installing and setting up the "receiver" at the subscriber's premises.

The two previous variants may of course be combined.

The transmission system which is the subject of the invention can be applied to any type of data exchange requiring transmission by satellite, by radio relay or even direct transmission by cable or radio waves.

## Claims

1. System for transmitting data between a distribution centre (1) and a subscriber (3i), this system transporting a useful signal to the subscriber and possessing a return path, characterized in that a carrier signal is transmitted in addition to the useful signal and in that the frequency of the signal transmitted over the return path is synchronized with the frequency of the carrier signal.

2. Transmission system according to Claim 1, characterized in that the carrier signal is modulated by a signal which includes a subscriber identification code and in that, when the code is recognized, the receiver sends data over the return path.

3. Receiver of a system for transmitting data according to Claim 1, characterized in that it includes at least one mixer (14) receiving the carrier signal and delivering a signal whose frequency is tied to that of the return signal.

4. Receiver according to Claim 3, characterized in that it includes a second mixer (17) for acting on the frequency of the return signal, an input of this mixer receiving a modulated useful signal to be transmitted over the return path and the second input signal from the first mixer (14).

5. Receiver according to Claim 3, characterized in that the carrier signal also synchronizes the frequency of a first oscillator effecting the frequency transposition (24) of the useful modulation signal to be transmitted over the return path and the frequency of a second oscillator (26) effecting the transposition of this carrier signal.

6. Receiver according to Claim 3, characterized in that it includes a circuit for decoding a subscriber identification code transported by the carrier signal.

7. System according to Claim 1 or 2, characterized in that a signal of the return path is a CDMA-type modulated signal.

8. System according to any one of the preceding claims, characterized in that the data are those of television pictures and transmission is performed by satellite.
